# NEUE EUROPÄISCHE PATENTSCHRIFT

(11) **EP 1 733 839 B2**
(45) Veröffentlichungstag und Bekanntmachung des Hinweises auf die Entscheidung über den Einspruch: **17.05.2017**
(45) Hinweis auf die Patenterteilung: 22.04.2009
(21) Anmeldenummer: 06012096.1
(22) Anmeldetag: 13.06.2006
(51) Int. Cl.: B23P 19/04, B60J 10/00

(54) **Verfahren und Vorrichtung zur Bildung einer Dichtung oder Abdeckung an einem Dichtungs-bzw. Abdeckungsträger, insbesondere an einer Fahrzeugtür oder einem Karosserieausschnitt**
Process and device for forming a sealing or cover at a seal or cover carrier, in particular a vehicle door or a vehicle body opening
Procédé et dispositif de formation de joints d'étanchéité ou de couverture sur un support de joint ou de couverture, en particulier sur une porte de véhicule ou sur une ouverture de carosserie d'un véhicule

(30) Priorität: 16.06.2005 DE 102005028069
(43) Veröffentlichungstag der Anmeldung: 20.12.2006
(73) Patentinhaber: CQLT SaarGummi Technologies S.à.r.l., 5544 Remich (LU)
(72) Erfinder: Kast, Christian, 66663 Merzig (DE)
(74) Vertreter: Wolff, Matthias

(56) Entgegenhaltungen:
- EP-A- 1 502 790
- AT-B- 391 331
- DE-A1- 3 920 659
- DE-A1- 4 020 839
- DE-A1-102004 035 205
- DE-B2- 2 726 454
- JP-A- S62 261 957
- US-A- 3 827 296

## Beschreibung

Die Erfindung betrifft ein Verfahren zur Bildung einer Dichtung oder Abdeckung an einem Dichtungs- bzw. Abdeckungsträger, insbesondere an einer Fahrzeugtür oder einem Karosserieausschnitt, wobei die Dichtung bildendes Strangmaterial von einer Rolle oder Wicklung abgewickelt, das abgewickelte Strangmaterial dem Träger zugeführt, in Stranglängsrichtung fortlaufend mit dem Träger verbunden und ein der Länge (L) der Dichtung oder Abdeckung entsprechender Endabschnitt von dem zugeführten Strangmaterial abgetrennt wird, wobei das von der Rolle abgewickelte Strangmaterial vor der Verbindung mit dem Träger geprüft wird und als fehlerhaft ermittelte Abschnitte des Strangmaterials abgetrennt und als Abfall ausgesondert werden.

Ein Verfahren der o. g. Art geht aus der EP-A-1 502 790 hervor. Zur Bildung einer Dichtung an einer Fahrzeugtür wird Strangmaterial von einer Rolle abgewickelt und der Strang fortlaufend mit Hilfe eines Roboters am Dichtungssitz der Fahrzeugtür befestigt. Vorteilhaft kann vom Hersteller auf Rollen geliefertes Strangmaterial vor Ort von der Rolle unmittelbar auf den Dichtungsträger überführt werden. Als zur Verarbeitung ungeeignet erkannte Abschnitte des Dichtungsstrangs werden abgetrennt und als Abfall ausgesondert.

Der vorliegenden Erfindung liegt die Aufgabe zugrunde, die durch ein solches Verfahren erreichbare Fertigungssicherheit zu erhöhen.

Das diese Aufgabe lösende Verfahren nach der Erfindung ist dadurch gekennzeichnet, dass das Strangmaterial ferner vor dem Aufwickeln auf die Rolle geprüft wird, dass bei Prüfung vor dem Aufwickeln als fehlerhaft erkannte Abschnitte des Strangmaterials markiert oder/und Anfangs- und Endkoordinaten fehlerhafter Abschnitte gespeichert werden und dass die Abtrennung fehlerhafter Abschnitte von dem von der Rolle abgewikkelten Strangmaterial anhand der vor dem Aufwickeln des Strangmaterials auf die Rolle erzeugten Markierungen oder/und gespeicherten Anfangs- und Endkoordinaten erfolgt.

Das Strangmaterial wird schon vor dem Aufwikkeln auf die Rolle beim Hersteller des Strangmaterials geprüft. Die Aussonderung fehlerhafter Abschnitte erfolgt dann bei der Verarbeitung des Strangmaterials vor Ort automatisch. Der zur Erzeugung des Strangmaterials selbst erforderliche Aufwand kann sich verringern. Das verarbeitete Strangmaterial braucht nicht fehlerfrei zu sein.

Das Strangmaterial kann z. B. mit Hilfe einer Rollapplikationseinrichtung auf den Träger aufgebracht werden, welcher das abgewickelte Strangmaterial kontinuierlich zugeführt wird und die das Strangmaterial in der Regel entsprechend der Geschwindigkeit, mit welcher es von der Rolle abgewickelt wird, verarbeitet. Die Endstirnflächen des auf den Träger aufgebrachten Endabschnitts des Strangmaterials lassen sich bei Bedarf unter Bildung eines geschlossenen Rings miteinander verbinden, z. B. verkleben.

Die Markierung kann z. B. Anfang und Ende des fehlerhaften Abschnitts kennzeichnen. Es wäre aber auch eine durchgehende Markierung möglich. Die Prüfeinrichtung der das Strangmaterial zur Bildung der Dichtung oder Abdeckung verarbeitenden Vorrichtung führt dann die Prüfung des zu verarbeitenden Strangmaterials anhand der Markierungen oder Koordinaten durch.

Bei fehlerhaften Strangabschnitten größerer Länge ist es zweckmäßig, diese Abschnitte schon vor dem Aufwickeln auf die Rolle herauszutrennen. Hierbei entstehende Strangenden können durch ein geeignetes Fügeverfahren wieder miteinander verbunden, vorzugsweise verklebt werden. Zweckmäßig werden nur fehler hafte Abschnitte oberhalb einer vorgegebenen Länge herausgetrennt. Das Heraustrennen kürzerer Abschnitte lohnt sich dann nicht, wenn beim Prüfen in der Applikationseinrichtung die Verbindungsstellen als Fehler ermittelt und entsprechende Endabschnitte ausgesondert werden.

Eine Vorrichtung weist eine die Dichtung oder Abdeckung bildendes Strangmaterial auf den Träger aufbringende Applikationseinrichtung auf, der eine Rolle vorgeschaltet ist, auf welche das Strangmaterial gewickelt ist, wobei die Applikationseinrichtung zur in Stranglängsrichtung fortlaufenden Verbindung des zugeführten Strangmaterials mit dem Träger vorgesehen ist, ferner eine Trenneinrichtung, welche von dem zugeführten Strangmaterial einen Endabschnitt entsprechend der Länge (L) der Dichtung oder Abdeckung abtrennt sowie eine Prüfeinrichtung zur Ermittlung fehlerhafter Abschnitte des Strangmaterials auf. Die genannte Trenneinrichtung lässt sich auch zur Abtrennung als fehlerhaft ermittelter Abschnitte nutzen.

Es ist ein als Transportbehälter für die Rolle verwendbarer Rollenhalter vorgesehen. Die Rolle kann innerhalb des Transportbehälters in einer Transportposition arretierbar sein, so dass sie sich nicht drehen kann. Vor Ort wird die Rolle innerhalb des Transportbehälters in eine Betriebsposition gebracht, in der sie drehbar ist. Vorzugsweise sind die Rollenhalter bzw. Transportbehälter mit den darin angeordneten Rollen zu Transportzwecken stapelbar. Vorteilhaft kann das Strangmaterial mit dem Rollenhalter versandt und bis vor Ort gebracht werden, wo der Rollenhalter bzw. Transportbehälter einen Bestandteil der zur Anbringung von Dichtungen, z.B. an Fahrzeugtüren oder Karosserieausschnitten, verwendeten Vorrichtung bildet.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: eine Vorrichtung, durch welche Fahrzeugtüren mit einer Strangdichtung versehen werden,
- Fig. 2: eine in der Vorrichtung von Fig. 1 verwendete Baugruppe mit einer Rolle für die Aufnahme von Dichtungsstrangmaterial,
- Fig. 3: eine Anlage zur Beschickung von Rollen gemäß Fig. 2 mit Dichtungsstrangmaterial in einer Seitenansicht, und
- Fig. 4: die Anlage von Fig. 3 in einer Draufsicht.

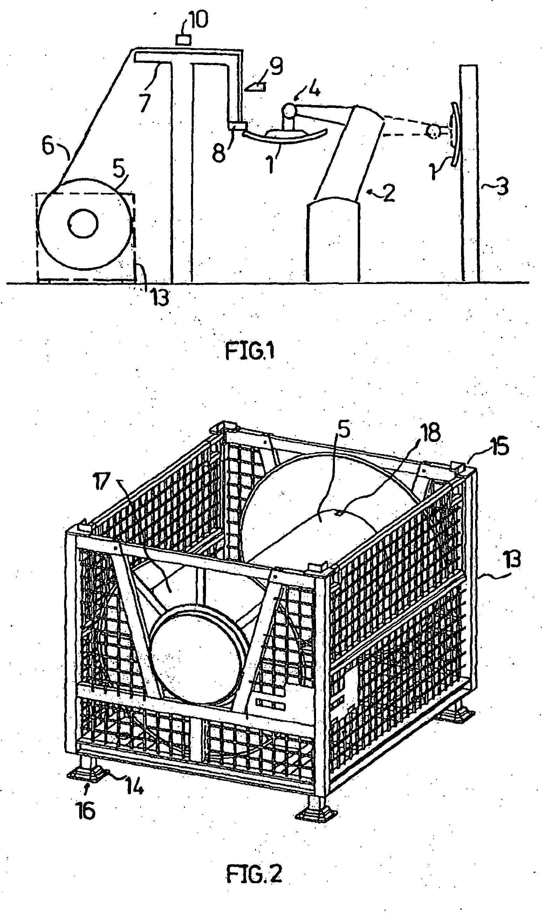

Eine in Fig. 1 gezeigte Vorrichtung zur Anbringung von Dichtungen an Fahrzeugtüren 1 umfasst einen Roboter 2, welcher jeweils eine Fahrzeugtür 1 von einer Transporteinrichtung 3 übernimmt, in eine Bearbeitungsposition 4 überführt und nach der Bearbeitung zurück zu der Transporteinrichtung 3 befördert.

Die in Fig. 1 gezeigte Vorrichtung umfasst ferner eine Rolle 5, auf welche Dichtungsstrangmaterial 6 aufgewickelt ist. In dem betrachteten Ausführungsbeispiel beträgt die Länge des aufgewickelten Strangs etwa 1000 m.

Eine Transport- und Führungseinrichtung 7 wickelt das Dichtungsstrangmaterial 6 von der Rolle 5 ab und führt es über einen Speicher (nicht gezeigt) einem Rollapplikationskopf 8 zu. Der Rollapplikationskopf 8 befestigt, z. B. durch Kleben oder Aufstecken, das durch die Transport- und Führungseinrichtung 7 laufend antransportierte Dichtungsstrangmaterial 6 an dem vorgesehenen Dichtungssitz am Türrand der Fahrzeugtür 1. Währenddessen sorgt der Roboter 2 für eine Dreh- und Translationsbewegung der Fahrzeugtür 1 relativ zum ortsfesten Rollapplikationskopf 8, so dass ein am Rand der Fahrzeugtür 1 umlaufender, geschlossener Dichtungsring gebildet wird.

Eine Trenneinrichtung 9 schneidet den auf die Fahrzeugtür 1 aufgebrachten Endabschnitt des Strangmaterials 6 von dem antransportierten Strang ab. Auf das gebildete freie Stirnende des Endabschnitts kann ggf. Kleber aufgetragen werden.

Eine Prüfeinrichtung 10 stellt fest, ob das antransportierte Dichtungsstrangmaterial Fehler aufweist.

Die Transport- und Führungseinrichtung 7 weist ferner eine (nicht gezeigte) Vorschubmesseinrichtung auf, welche es ermöglicht, das Strangmaterial um einen gewünschten Längenbetrag weiterzutransportieren. Vorschubmesswerte können ggf. gespeichert und verarbeitet werden.
Der Rollapplikationskopf 8 ist mit einem (nicht gezeigten) Endschalter versehen, der den Antransport von Dichtungsstrangmaterial unterbricht, wenn das jeweilige Strangende die Ausgangsposition zur Verarbeitung des Dichtungsstrangmaterials durch den Rollapplikationskopf 8 erreicht hat.

Die Transport- und Führungseinrichtung 7 schiebt bis zur jeweiligen Betätigung des Endschalters den Strang jeweils um die zur Bildung einer umlaufenden Dichtung benötigte Länge L vor. Hat die Prüfeinrichtung 10 während des Vorschubs des Dichtungsstrangmaterials 6 bis zum Endschalter einen Fehler ermittelt, so kann das betreffende Materialstück bis zu erkannten Fehlerstelle nicht verwendet werden. Die Transport- und Führungseinrichtung 7 schiebt daher das Dichtungsstrangmaterialstück so weit vor, dass das betreffende Materialstück einschließlich der Fehlerstelle durch die Trenneinrichtung 9 abgetrennt und durch eine nicht gezeigte Einrichtung als Abfallmaterial ausgesondert wird.

In die an der Fahrzeugtür gebildete Dichtung können in einem abschließenden Arbeitsgang an tief gelegenen Stellen Entwässerungsöffnungen eingebracht werden.

Zur drehbaren Lagerung der Rolle 5 dient ein Rollenhalter 13, der gleichzeitig als Transportbehälter für die Rolle 5 dient. Der Rollenhalter bzw. Transportbehälter 13 ist stapelbar und weist neben Trägerfüßen 14 an seinen oberen vier Ecken jeweils eine Aufnahme 15 auf, welche bei 16 in einen Trägerfuß 14 eines darüber liegenden Transportbehälters eingreifen kann.

Fig. 2 zeigt die Rolle 5 innerhalb des Transportbehälters 13 in einer Transportposition, in welcher sie arretiert ist. Die Rolle 5 ist an ihren beiden Enden jeweils in einer V-förmigen Öffnung 17 im Transportbehälter 13 gelagert. Durch Anhebung gelangt die Rolle in die in Fig. 1 gezeigte Arbeitsposition, in welcher sie drehbar ist, so dass Strangmaterial 6 von der Rolle abgewickelt werden kann. Eine Öffnung 18 in der Rolle 5 dient zur Befestigung des inneren Strangendes.

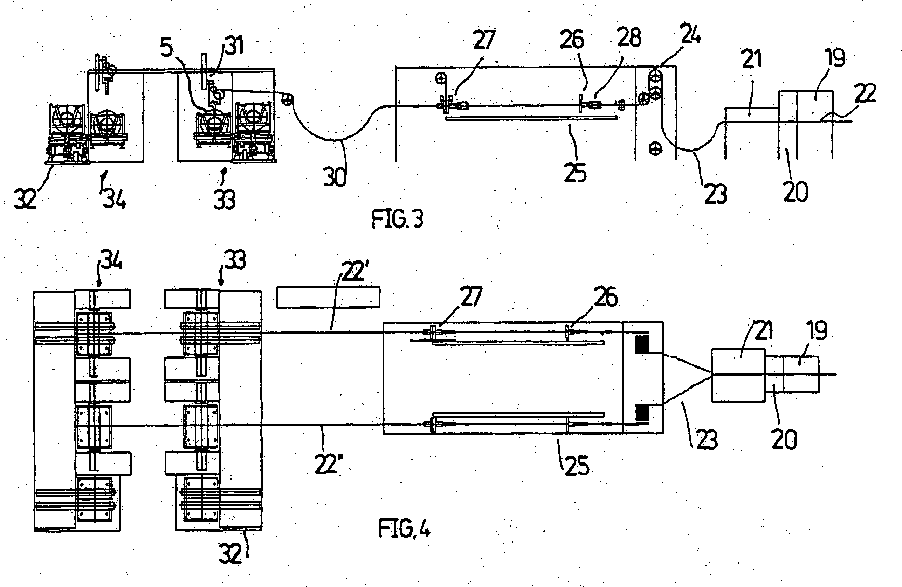

Es wird nachfolgend auf die Fig. 3 und 4 Bezug genommen, wo eine beim Hersteller des Strangmaterials zu verwendende Anlage zur Bearbeitung erzeugten Strangmaterials vor der Aufwicklung auf Rollen 5 gezeigt ist.

Die Anlage umfasst eine Prüfeinheit 19, welche aus einer (nicht gezeigten) Produktionsanlage zugeführtes Strangmaterial 22 auf Fehler überprüft. Eine der Prüfeinheit 19 nachgeordnete Markierungseinheit 20 markiert fehlerhafte Abschnitte. Fehlerhafte Abschnitte können z.B. durch Anfangs- oder Endmarkierungen gekennzeichnet sein. Es bestände ferner die Möglichkeit, eine unterbrochen oder ununterbrochen durchgehende Markierung entlang des schadhaften Abschnitts zu bilden. Die Markierung kann z.B. mit Hilfe eines Tintenstrahldruckers aufgebracht werden.

An die Markierungseinheit 20 schließt sich eine Trenneinheit 21 an, welche das in dem betreffenden Ausführungsbeispiel als Doppelstrang extrudierte, von der Produktionsanlage zugelieferte Strangmaterial 22 in zwei Stränge 22' und 22" aufteilt.

Die aufgeteilten Stränge 22' und 22" laufen jeweils über eine Schleife 23 in einen Speicher 24 ein. An den Speicher 24 schließt sich eine Einrichtung 25 an, in welcher fehlerhafte Abschnitte, die eine vorbestimmte Länge überschreiten, aus den Strängen herausgetrennt und die dabei entstandenen Strangenden miteinander verbunden werden.

Entsprechend verfügt die Einrichtung 25 über Schneid- und Klemmeinheiten 26 und 27, welche an den Enden eines fehlerhaften Abschnitts Trennschnitte bilden und die an die entstandene Lücke angrenzenden Strangenden festhalten, sowie über eine Transporteinheit 28, welche eines der beiden Strangenden dem anderen Ende zuführt, wobei die Speichereinheit 24 das erforderliche Strangmaterial nachliefert. Schließlich umfasst die Einrichtung 25 noch eine Verbindungseinrichtung, welche die einander zugeführten Strangenden zusammenfügt und vorzugsweise miteinander verklebt.
Für den Fall, dass das Strangmaterial mit einem doppelt klebenden Streifen für die Befestigung am Träger versehen ist, werden an der betreffenden Stelle auch die durch die Trennung entstandenen Enden an einer den Klebestreifen schützenden Abdeckung miteinander verbunden. Diese Verbindung, die mit Hilfe eines die beiden Enden überlappenden Klebebandabschnitts erfolgen kann, ist erforderlich, um die Abdeckung kurz vor dem Aufbringen des Strangmaterials auf den Träger kontinuierlich vom Klebestreifen abziehen zu können. Zweckmäßig erkennt die obengenannte Prüfeinrichtung 10 den betreffenden zur Verbindung verwendeten Klebebandabschnitt und kann aufgrund dieses Abschnitts die Verbindungsstelle von anderen, produktionsbedingten Verbindungsstellen der Abdeckung unterscheiden.

Über eine Schleife 30 und eine Verlegeeinheit 31 gelangt das Dichtungsstrangmaterial dann auf eine Rolle 5, wobei die Verlegeeinheit durch horizontale und ggf. vertikale Bewegung des Strangs dafür sorgt, dass das Dichtungsstrangmaterial die Rolle 5 gleichmäßig ausfüllt.

Die Verlegeeinheit 31 umfasst ferner eine Regelungseinrichtung, welche dafür sorgt, dass die Zugspannung des Strangs beim Aufwinkeln konstant bzw. innerhalb eines vorgesehenen Bereichs bleibt.

Über Transporteinrichtungen 32 lassen sich die gefüllten Rollen abtransportieren.

Wie Fig. 3 und 4 erkennen lassen, sind je Strang 22' und 22" zwei hintereinander angeordnete Wicklungsstationen 33 und 34 gebildet. Somit kann, wenn eine Rolle gefüllt ist, die nächste Rolle zur Füllung schon bereit stehen.

Wie aus Fig. 3 hervorgeht, befindet sich die Rolle 5 bei der Aufwicklung des Dichtungsstrangmaterials bereits in dem Transportbehälter 13.

Die Heraustrennung eines fehlerhaften Abschnitts durch die Einrichtung 25 erfolgt in dem betreffenden Ausführungsbeispiel, wie oben bereits erwähnt, nur dann, wenn die Länge des fehlerhaften Abschnittes größer als eine vorgegebene Länge ist. Wenn die Prüfeinrichtung 10 der in Fig. 1 gezeigten Verarbeitungsvorrichtung eine Verbindungsstelle als Fehler ansieht und fehlerhafte Abschnitte als Abfall aussondert, lohnt es sich nur, dass die Einrichtung 25 Abschnitte größerer Länge heraustrennt.

Die Länge der fehlerfreien Abschnitte des aufgewickelten Strangmaterials kann so gewählt sein, dass das Heraustrennen fehlerhafter Abschnitte vor Ort im Einklang mit vorgegebenen Taktzeiten der Transporteinrichtung 3 steht.

Dichtungsstränge für die Bildung von Türdichtungen weisen einen schlauchförmigen Dichtungsabschnitt mit Entlüftungsöffnungen auf. Für die Durchführung des obenbeschriebenen Verfahrens zur Bildung von Dichtungen an Fahrzeugtüren ist es von Bedeutung, dass im Zuge der Bildung solcher Entlüftungsöffnungen kein oder nur wenig abgetrenntes Material, z.B. durch Bohren/Stanzen gebildete Stopfen oder andere Abfälle, ins Innere des Schlauchabschnitts gelangt. Wegen der großen aufgewickelten Stranglängen kann es durch Sammlung solchen Materials im Schlauchabschnitt des Dichtungsstrangs sonst zu Pfropfenbildungen kommen. Einen solchen Pfropfen enthaltende Strangabschnitte wären für die Bildung einer Türdichtung ungeeignet.

## Patentansprüche

1. Verfahren zur Bildung einer Dichtung oder Abdeckung an einem Dichtungs- bzw. Abdeckungsträger, insbesondere an einer Fahrzeugtür (1) oder einem Karosserieausschnitt, wobei die Dichtung oder Abdeckung bildendes Strangmaterial (6) von einer Rolle (5) oder Wicklung abgewickelt, das abgewickelte Strangmaterial (6) dem Träger zugeführt, in Stranglängsrichtung fortlaufend mit dem Träger verbunden und ein der Länge (L) der Dichtung entsprechender Endabschnitt von dem zugeführten Strangmaterial (6) abgetrennt wird, wobei das von der Rolle abgewickelte Strangmaterial (6) vor der Verbindung mit dem Träger geprüft wird und als fehlerhaft ermittelte Abschnitte des Strangmaterials (6) abgetrennt und als Abfall ausgesondert werden,
**dadurch gekennzeichnet,**
**dass** das Strangmaterial (6) ferner vor dem Aufwickeln auf die Rolle (5) geprüft wird,
**dass** bei der Prüfung vor dem Aufwickeln als fehlerhaft erkannte Abschnitte des Strangmaterials (6) markiert oder/und Anfangs- und Endkoordinaten fehlerhafter Abschnitte gespeichert werden, und
**dass** die Abtrennung fehlerhafter Abschnitte von dem von der Rolle (5) abgewickelten Strangmaterial (6) anhand der vor dem Aufwickeln des Strangmaterials (6) auf die Rolle (5) erzeugten Markierungen oder/und gespeicherten Anfangs- und Endkoordinaten erfolgt.

2. Verfahren nach Anspruch 1,
**dadurch gekennzeichnet,**
**dass** vor dem Aufwickeln auf die Rolle (5) fehlerhafte Abschnitte aus dem Strangmaterial (6) herausgetrennt und die beiden durch die Trennung gebildeten Enden des Strangmaterials (6) miteinander verbunden werden.

3. Verfahren nach Anspruch 2,
**dadurch gekennzeichnet,**
**dass** nur solche fehlerhaften Abschnitte herausgetrennt werden, deren Länge einen vorgegebenen Wert überschreitet.

4. Verfahren nach einem der Ansprüche 1 bis 3,
**dadurch gekennzeichnet,**
**dass** das Aufwickeln des Strangmaterials (6) auf die Rolle (5) unter Regelung der Zugspannung des Strangmaterials (6) erfolgt.

5. Verfahren nach einem der Ansprüche 1 bis 4,
**dadurch gekennzeichnet,**
**dass** in einen schlauchförmigen Abschnitt des Strangmaterials Entlüftungsöffnungen derart eingebracht werden, dass kein oder nur wenig abgetrenntes Material ins Innere des Schlauchabschnitts gelangt.

## Claims

1. Method of forming a seal or a cover at a seal carrier or cover carrier, particularly at a vehicle door (1) or a bodywork cut-out, wherein strip material (6) forming the seal or cover is unwound from a reel (5) or coil, the unwound strip material (6) is fed to the carrier and continuously connected in strip longitudinal direction with the carrier and an end section corresponding with the length (L) of the seal is separated from the fed strip material (6), wherein the strip material (6) unwound from the reel is checked prior to connection with the carrier and sections of the strip material (6) ascertained to be faulty are separated and discarded as waste, **characterised in that** the strip material (6) is further checked prior to winding up on the reel (5), that sections, which are recognised as faulty in the check prior to winding up, of the strip material (6) are marked and/or start and end co-ordinates of faulty sections are stored and that the separation of faulty sections from the strip material (6) unwound from the reel (5) is carried out on the basis of the markings produced and/or start and end co-ordinates stored prior to the winding-up of the strip material (6) on the reel (5).

2. Method according to claim 1, **characterised in that** prior to the winding-up on the reel (5) faulty sections are separated from the strip material (6) and the two ends, which are formed by the separation, of the strip material (6) are connected together.

3. Method according to claim 2, **characterised in that** separation is carried out only of such faulty sections of which the length exceeds a predetermined value.

4. Method according to any one of claims 1 to 3, **characterised in that** the winding-up of the strip material (6) on the reel (5) is carried out with regulation of the tensile stress of the strip material (6).

5. Method according to any one of claims 1 to 4, **characterised in that** ventilation openings are formed in a hose-shaped section of the strip material in such a manner that no or only a little separated material passes into the interior of the hose section.

## Revendications

1. Procédé de formation d'un joint d'étanchéité ou d'un recouvrement à un support d'étanchéité respectivement de recouvrement, en particulier à une porte de véhicule (1) ou une découpure de carrosserie, dans lequel un matériau en boudin (6) formant le joint d'étanchéité ou le recouvrement est déroulé d'un rouleau (5) ou enroulement, le matériau en boudin déroulé (6) est acheminé au support, est relié dans la direction longitudinale du boudin continuellement au support, et une section d'extrémité correspondant à la longueur (L) du joint d'étanchéité est séparée du matériau en boudin acheminé (6), où le matériau en boudin (6) déroulé du rouleau est vérifié avant l'assemblage avec le support, et des sections défectueuses du matériau en boudin (6) sont séparées et sont mises au rebut comme déchets, **caractérisé en ce que**
le matériau en boudin (6) est vérifié en outre avant l'enroulement sur le rouleau (5), **en ce que** lors de la vérification avant l'enroulement, des sections à défaut du matériau en boudin (6) sont marquées et/ou des coordonnées de début et de fin des sections à défaut sont stockées, et
**en ce que** la séparation de sections à défaut du matériau en boudin (6) déroulé du rouleau (5) a lieu à l'aide des marquages et/ou coordonnées de début et de fin stockées produits avant l'enroulement du matériau en boudin (6) sur le rouleau (5).

2. Procédé selon la revendication 1,
**caractérisé en ce**
**qu'**avant l'enroulement sur le rouleau (5), des sections à défaut sont séparées du matériau en boudin (6), et les deux extrémités du matériau en boudin (6) formées par la séparation sont reliées l'une à l'autre.

3. Procédé selon la revendication 2,
**caractérisé en ce que**
seulement des sections à défaut sont séparées dont la longueur dépasse une valeur prédéterminée.

4. Procédé selon l'une des revendications 1 à 3,
**caractérisé en ce que**
l'enroulement du matériau de boudin (6) sur le rouleau (5) a lieu en réglant la contrainte de traction du matériau en boudin (6).

5. Procédé selon l'une des revendications 1 à 4,
**caractérisé en ce que**
sont ménagées dans une section tubulaire du matériau en boudin des ouvertures d'aération de telle sorte qu'aucun ou seulement peu de matériau séparé arrive dans l'intérieur de la section tubulaire.
